# EUROPÄISCHE PATENTSCHRIFT

(11) **EP 0 572 804 B1**
(45) Veröffentlichungstag und Bekanntmachung des Hinweises auf die Patenterteilung: **09.10.1996**
(21) Anmeldenummer: 93107010.6
(22) Anmeldetag: 29.04.1993
(51) Int. Cl.: H04N 1/10, H04N 1/04, G01C 11/02

(54) **Anordnung zur geometriegetreu hochauflösenden Abtastung grosser Bildformate**
Arrangement for precise high-resolution scanning of large picture formats
Dispositif pour le balayage avec précision et en haute définition d'images de grandes dimensions

(30) Priorität: 06.05.1992 DE 4214926
(43) Veröffentlichungstag der Anmeldung: 08.12.1993
(73) Patentinhaber: RHEINMETALL JENOPTIC OPTICAL METROLOGY GmbH, 07745 Jena-Göschwitz (DE)
(72) Erfinder: Goldschmidt, Ralf, O-6902 Jena (DE); Borchardt, Werner, O-6908 Jena (DE)
(74) Vertreter: Geyer, Werner, Dr.-Ing.

(56) Entgegenhaltungen:
- EP-A- 0 105 661
- WO-A-83/03516
- US-A- 4 858 020
- US-A- 5 018 023
- US-A- 5 050 001

## Beschreibung

Die Erfindung betrifft eine Anordnung zur geometriegetreu hochauflösenden Abtastung großer Bildformate. Sie findet Anwendung bei Aufgaben mit notwendigem metrischen Bildeinzug von Bildvorlagen, die mehrfach größer als gängige CCD-Matrizen sind, wie z. B. in der 2D-und 3D-Koordinatenmeßtechnik (Photogrammetrie) und bei optoelektronischen Scannern mit hohen Anforderungen an die Geometrietreue.

Bei der Erfassung großer Bildformate mittels CCD-Matrixempfängern sind als Hilfsmittel für die Gewährleistung eines geometrisch eindeutigen und maßhaltigen Bildeinzuges sowohl Bildteiler auf Basis optischer Fasern, wobei ein entsprechender Mehraufwand an Matrixempfängern erforderlich ist, als auch die Projektion von Gitterstrukturen in die Objekt- oder Bildebene des Meßobjektes bzw. der Bildvorlage, wobei das gitterbeaufschlagte Abbild der Bildvorlage relativ zu einem abtastenden Matrixempfänger bewegt wird, bekannt.
Insbesondere die letztere Verfahrensweise hat auf Grund der einfachen Anbindung einer Maßverkörperung an die Bildvorlage zu einer befriedigenden geometrischen Auflösung der Bildaufnahme von großformatigen Vorlagen geführt.
So wird in der EP-A-0 237 601 ein Verfahren zur photogrammetrischen Erfassung eines Objektes mit Hilfe eines optoelektronischen Festkörper-Flächensensors beschrieben, das ein Reseaugitter zur exakten Bestimmung der Position der Teilbilder einer großformatigen Vorlage so einsetzt, daß in jedem Sensorbild mindestens eine Reseaumasche erfaßt wird. Damit ist bei hinreichend genauer Kenntnis der Näherungsposition des Sensors die Nummer der Reseaumasche bestimmt und jeder Bildpunkt auf Sollwerte des Reseausystems zu beziehen.
Die DE-A-34 28 325 offenbart eine Anordnung von optoelektronischen Festkörper-Flächensensoren in einem photogrammetrischen Abbildungssystem zur Erreichung einer geometrisch eindeutigen Zuordnung der Position von Sensoren, deren Bildfläche kleiner als das Gesamtformat ist. Hierbei wird das Punktefeld eines Reseaus in den Abbildungsvorgang so einbezogen, daß mindestens eine Masche des Reseaus von einer Sensorfläche erfaßt wird, wobei das Reseau entweder auf der Vorlage mitbewegt wird oder in der Bildebene angebracht ist, die der Sensor abtastet.
Auf der gleichen Basis eines Punktefeldes, erzeugt durch ein das Gesamtbild abdeckendes Reseau, wobei sich der Flächensensor hinter der Reseauebene befindet, wird in der DE-A-38 11 837 beansprucht, daß die Reseaupunkte mit punktförmiger Beleuchtung projiziert werden und eine Fokussierung des Flächensensors bei konstanter Zuordnung des Aufnahmeprojektionszentrums zum Reseau.
Der Nachteil der beschriebenen Lösungen liegt darin, daß zu der exakten metrischen Abtastung stets maßverkörpernde Hilfsmittel, die die Abtastung beeinträchtigen bzw. den Aufwand erhöhen, erforderlich sind.

Der Erfindung liegt die Aufgabe zugrunde, einen metrischen, hochauflösenden Bildeinzug von großen Bildformaten zu erreichen, der auf Basis von CCD-Matrixabtastung ohne maßverkörpernde Hilfsmittel auskommt.
Die Aufgabe wird bei einer Anordnung zur geometriegetreu hochauflösenden Abtastung großer Bildformate mit mindestens einer CCD-Matrix, deren Größe nur einen Bruchteil der abzutastenden Bildvorlage ausmacht, einem Frame-Grabber und einem Bewegungsmechanismus dadurch gelöst, daß die CCD-Matrix eine exakt auf Pixelempfindlichkeitsverteilung vermessene CCD-Matrix ist, die mit den daraus resultierenden tatsächlichen Pixelmittenabständen selbst eine absolute Maßverkörperung in Form des Pixelrasters darstellt, die CCD-Matrix einen aktiven Pixelbereich besitzt, der dem maximalen Speicherbereich des Frame-Grabbers angepaßt und in Anzahl und Lage der Pixel statt ist, wobei die Konstanz der eineindeutigen Zuordnung des Pixelbereiches zum Speicherbereich auf einer Pixelsynchronität des Bildeinzuges beruht, und der Bewegungsmechanismus eine entsprechend dem gemessenen Pixelraster in ihrer Genauigkeit angepaßte Scannier-Präzisionsmechanik ist, mit der der aktive Pixelbereich der CCD-Matrix lückenlos und im wesentlichen ohne Überlappungen flächendeckend im abzutastenden Bildformat verschiebbar ist.
Zur Verkurzung der Abtastzeiten wird das Bildformat vorteilhaft in deckungsgleiche Teile unterteilt, die mit einer entsprechenden Zahl von CCD-Matrizen von der Scannier-Präzisionsmechanik gleichzeitig im selben Muster zeitgleich oder zeitversetzt abgetastet werden. Zweckmäßig ist insbesondere bei rechteckigen Bildformaten eine Teilung in zwei Hälften, die zur Halbierung des maximalen Scannierweges führt. Vorteilhaft werden bei Teilung des Bildformats und zeitgleicher Abtastung CCD-Matrizen gleicher Charge eingesetzt. Zur Vermeidung der Überlappung der aktiven Pixelbereiche während aufeinanderfolgender Abtastschritte der CCD-Matrix ist die Scannier-Präzisionsmechanik zweckmäßig aus Materialien gefertigt, die einen niedrigen Wärmeausdehnungskoeffizienten aufweisen. Um die verbleibenden Auswirkungen zu kompensieren, wird die Präzisionsmechanik so justiert, daß die lückenlose Aneinanderreihung des aktiven Pixelbereiches je Abtastschritt für die höchste zulässige Umgebungstemperatur gewährleistet ist, wobei die geringfügigen Überlappungen bei niedrigeren Temperaturen durch entsprechende Speicherzuweisung elektronisch eliminiert werden.
Der Grundgedanke der Erfindung liegt in der Überlegung, daß Hilfsmittel zur metrischen Maßverkörperung genau dann entbehrlich sind, wenn die CCD-Matrix selbst so genau vermessen und signalverarbeitungstechnisch beherrschbar ist, daß sie zuverlässig als absolute Maßverkörperung verwendet werden kann. Dazu ist erfindungsgemäß außer der exakten Vermessung der Pixelempfindlichkeitsverteilungen und der Bestimmung der Pixelmittenabstände eine unbedingte Pixelsynchronität zu gewährleisten. D. h. eine lokale Lichtintensitätsverteilung darf bei ihrer elektronischen Übernahme in den Frame-Grabber innerhalb verschiedener Bildeinzüge bei konstanten Verhältnissen ihre Position im Frame-Grabber-Speicher nicht verändern, und bei einem definierten Verschieben der Lichtintensitätsverteilung durch Bewegen der CCD-Matrix mittels der Scannier-Präzisionsmechanik um eine definierte Anzahl von Pixelmittenabständen muß sich diese Bewegung in einer Verschiebung um die entsprechende Zahl von Speicherplätzen im Frame-Grabber (Geometrietreue) niederschlagen. Wenn dazu eine ausreichend genaue Positionierung der Scannier-Präzisionsmechanik möglich ist, wird die metrisch exakte Bildabtastung allein mittels der CCD-Matrix als Maßverkörperung möglich.
Mit der erfindungsgemäßen Anordnung ist es möglich, eine geometriegetreu hochauflösende Abtastung großer Bildformate zu erreichen, die bei Verwendung einer CCD-Matrix ohne maßverkörpernde Hilfsmittel auskommt.

Die Erfindung soll nachstehend anhand eines Ausführungsbeispieles näher erläutert werden. Die Zeichnungen zeigen:
- Fig. 1: Lage und Anzahl des aktiven Pixelbereiches der CCD- Matrix und die adäquate Zuordnung der Speicherplätze des Frame-Grabbers
- Fig. 2: erfindungsgemäße Anordnung mit zweigeteiltem Bildformat
- Fig.3: schematische Darstellung der Bedingungen zur Erfüllung der erfindungsgemäß einzustellenden Pixelsynchronität

Die erfindungsgemäße Anordnung besteht in ihrem Grundaufbau aus einer CCD-Matrix 1, mit der das um ein Vielfaches größere Bildformat 4 abgetastet werden soll, einem Frame-Grabber 3 und einer Scannier-Präzisionsmechanik.

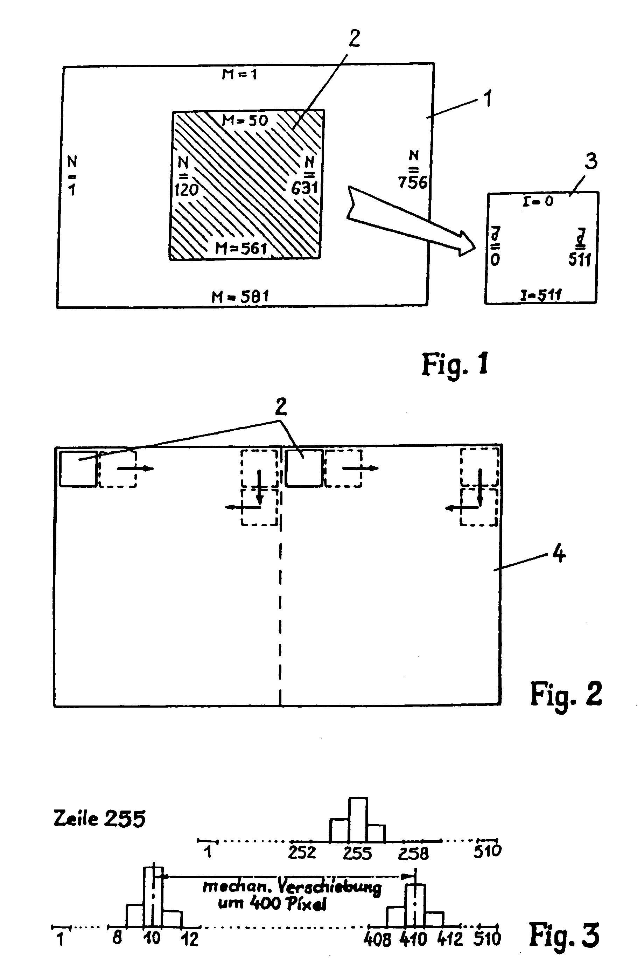

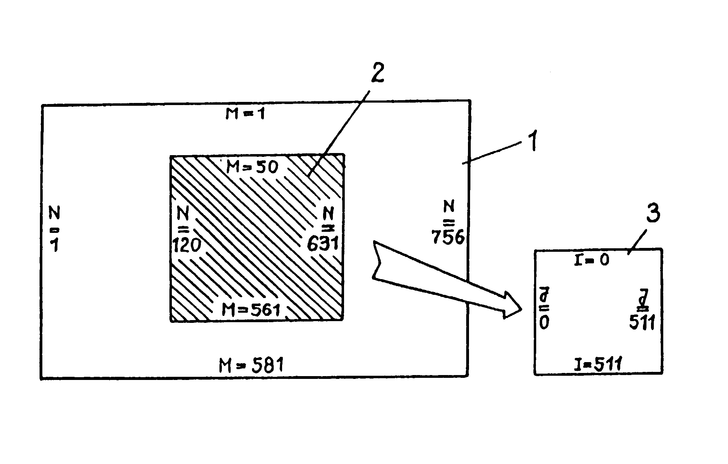

In Fig. 1 ist die CCD-Matrix 1 als Matrix mit M Zeilen und N Spalten dargestellt. Im Beispiel besitzt die CCD-Matrix 756 x 581 Pixel. Der Frame-Grabber 3 soll dabei einen für eine CCD- Auslesung verfügbaren Speicher von 512 x 512 Speicherplätzen haben. Durch die Größe des Speichers des Frame-Grabbers 3 ist das Volumen der auslesbaren Matrixpixel vorgegeben. Der daraus resultierende aktive Pixelbereich 2 der CCD-Matrix 1 kann prinzipiell beliebig gewählt werden, muß aber konstant sein und soll, wie im Beispiel nach Fig. 1 angegeben, auf der CCD-Matrix 1 liegen.
Die Konstanz des aktiven Pixelbereiches stellt neben der exakten Vermessung der Pixelempfindlichkeitsverteilung und damit des Pixelmittenabstandes, der das Pixelraster verkörpert, den Kernpunkt für die Verwendung der CCD-Matrix 1 selbst als Maßverkörperung dar. Diese Konstanz wird erreicht durch die pixelsynchrone Arbeitsweise von Speicherbereich I x J des Frame-Grabbers 3 und aktivem Pixelbereich 2, d. h. es muß für alle Auslesungen der CCD-Matrix 1 stets dasselbe Pixel auf demselben Speicherplatz abgelegt werden.
Ein großes Bildformat 4, das, wie in Fig. 2 angedeutet, rechteckig sein kann, wird beispielsweise durch zwei Matrizen 1 abgetastet, die mit ihren in Fig. 2 angedeuteten aktiven Pixelbereichen 2 dasselbe - beispielsweise mäanderförmige - Abtastmuster in jeweils einer Bildhälfte ausführen. Dabei werden sie einheitlich sowie auf Basis des gemessenen Pixelrasters lückenlos und im wesentlichen ohne Überlappungen durch die Scannier- Präzisionsmechanik geführt. Deshalb ist es vorteilhaft, wenn die Matrizen 1 aus ein und derselben Charge eines Herstellers stammen, um möglichst einheitliche Eigenschaften vorzufinden.
Aus dem Wissen über die Lage und die Anzahl der in den Frame- Grabber 3 übernommenen Matrixpixel (siehe Fig. 1) und der Größe des Bildformates 4 ergeben sich Abtastschrittweite und Abstand beider Matrizen, die für das lückenlose und überlappungsfreie geometriegetreue Scannieren notwendig sind. D. h. am Bildeinzug nehmen entsprechend Fig. 1 horizontal nur die Pixel 120 bis 631 und vertikal nur die Pixel 50 bis 561 jeder Matrix 1 teil, woraus sich die in Fig. 2 angedeuteten Scannierschritte zwingend ergeben. Zum Ausgleich von unerwünschten Überlappungen infolge von Temperaturschwankungen wird die einwandfreie lückenlose Aneinanderreihung des aktiven Pixelbereiches 2 in aufeinanderfolgenden Abtastschritten für die höchste zulässige Umgebungstemperatur eingestellt. Dadurch können die bei niedrigeren Temperaturen auftretenden Überlappungen durch entsprechende Speicherzuweisungen auf Basis von Eichungen elektronisch eliminiert werden.

Fig. 3 soll nun zur Erläuterung der letzten und wichtigsten Voraussetzung für die geometriegetreue metrische Abspeicherung des Bildinhaltes herangezogen werden. Ausgewählt wurde die Zeile 255. Im ersten Teilbild ist das Kriterium der stationären Abbildung einer lokalen Lichtintensitätsverteilung (z. B. eines Lichtspots kleiner als die Größe eines Matrixpixels) dargestellt als Ergebnis einer Mittelung über 200 Bildeinzüge. Das zweite Teilbild verdeutlicht das Kriterium der Geometrietreue der Matrix bei definiertem Verschieben der Spotabbildung um eine bestimmte Anzahl von experimentell bestimmten Pixelmittenabständen (hier 400 Pixel). Hierbei muß gewährleistet sein, daß das Maximum der Spotabbildung exakt um die entsprechende Zahl von Speicherplätzen im Frame-Grabber 3 abgelegt wird. Wenn beide Kriterien erfüllt sind, wie in Fig. 3 gezeigt, ist das Erfordernis der Pixelsynchronität erfüllt und mit der lückenlosen Aufeinanderfolge der aktiven Pixelbereiche 2 der Matrizen ein geometriegetreuer metrischer Bildeinzug des Bildformats 4 erreichbar.

## Patentansprüche

1. Anordnung zur geometriegetreu hochauflösenden Abtastung großer Bildformate mit mindestens einer CCD-Matrix, deren Größe nur einen Bruchteil der abzutastenden Bildvorlage ausmacht, einem Frame-Grabber und einem Bewegungsmechanismus dadurch gekennzeichnet, daß
a) die CCD-Matrix (1) eine exakt auf Pixelempfindlichkeitsverteilung vermessene CCD-Matrix (1) ist, die mit den daraus resultierenden tatsächlichen Pixelmittenabständen selbst eine absolute Maßverkörperung in Form des Pixelrasters darstellt,
b) die CCD-Matrix (1) einen aktiven Pixelbereich (2) besitzt, der dem maximalen Speicherbereich des Frame-Grabbers (3) angepaßt und in Anzahl und Lage der Pixel starr ist, wobei die Konstanz der eineindeutigen Zuordnung des Pixelbereiches zum Speicherbereich auf einer Pixelsynchronität des Bildeinzuges beruht,
und
c) der Bewegungsmechanismus eine entsprechend dem gemessenen Pixelraster in ihrer Genauigkeit angepaßte Scannier-Präzisionsmechanik ist, mit der der aktive Pixelbereich (2) der CCD-Matrix (1) lückenlos und im wesentlichen ohne Überlappungen flächendeckend im abzutastenden Bildformat (4) verschiebbar ist.

2. Anordnung nach Anspruch 1, dadurch gekennzeichnet,
daß das Bildformat (4) in deckungsgleiche Teile unterteilt ist und an die Scannier-Präzisionsmechanik eine der Anzahl der Bildformatteile entsprechenden Zahl von CCD-Matrizen (1) angebracht ist, so daß die Bildformatteile im gleichen Muster von der jeweils zugeordneten CCD-Matrix (1) abgetastet werden.

3. Anordnung nach Anspruch 2, dadurch gekennzeichnet,
daß das Bildformat (4) in zwei Hälften unterteilt ist, die auf Halbierung der Ausdehnung der maximalen Scannierwege ausgerichtet sind.

4. Anordnung nach Anspruch 2 oder 3, dadurch gekennzeichnet,
daß CCD-Matrizen gleicher Charge eingesetzt sind.

5. Anordnung nach einem der Ansprüche 1 bis 4, dadurch gekennzeichnet,
daß die Scannier-Präzisionsmechanik auf Grund geeigneter Materialauswahl nur geringste Temperaturabhängigkeit aufweist und die lückenlose Aneinanderreihung des aktiven Pixelbereiches (2) je Abtastschritt für die höchste zulässige Umgebungstemperatur justiert ist, wobei die geringen Überlappungen der aktiven Pixelbereiche (2) bei niedrigeren Temperaturen durch entsprechende Speicherzuweisungen elektronisch beseitigt werden.

## Claims

1. Arrangement for high-resolution scanning of large image formats with exact geometrical correspondence having at least one CCD matrix whose magnitude constitutes only a fraction of the image model to be scanned, a frame grabber, and a movement mechanism, characterized in that
a) the CCD matrix (1) is exactly dimensioned to pixel sensitivity distribution and, with the resulting actual pixel center distances, itself represents an absolute dimensional embodiment in the form of the pixel raster,
b) the CCD matrix (1) includes an active pixel area (2) adapted to the maximum memory area of the frame grabber (3) and is rigid with respect to the number and position of pixels, wherein the constancy of the unequivocal allocation of the pixel area to the memory area is based on a pixel synchrony of the image contraction, and
c) the movement mechanism is a high-precision scanning mechanism whose accuracy is adapted in accordance with the measured pixel raster and by means of which the active pixel area (2) of the CCD matrix (1) can be displaced in the image format to be scanned so as to cover the surface without gaps and substantially without overlaps.

2. Arrangement according to claim 1, characterized in that the image format (4) is divided into congruent parts and a number of CCD matrices (1) corresponding to the number of image format parts are arranged at the high-precision scanning mechanism so that the image format parts are scanned by the respective associated CCD matrix (1) in the same pattern.

3. Arrangement according to claim 2, characterized in that the image format (4) is divided into two halves with the intent of halving the extent of the maximum scanning distances.

4. Arrangement according to claim 2 or 3, characterized in that CCD matrices of the same batch are used.

5. Arrangement according to one of claims 1 to 4,
characterized in that the high-precision scanning mechanism has only the slightest dependence on temperature as a result of a suitable selection of materials, and the lining up of the active pixel area (2) without gaps for every scanning step is adjusted for the highest acceptable ambient temperature, wherein the slight overlapping of the active pixel areas (2) at lower temperatures is eliminated electronically by suitable memory allocations.

## Revendications

1. Dispositif pour le balayage à haute résolution géométriquement fidèle de grands formats d'images avec au moins une matrice CCD dont la taille ne constitue qu'une fraction du modèle d'image balayé, un numériseur d'images et un mécanisme de mouvement, caractérisé en ce que
a) la matrice CCD (1) est une matrice CCD déterminée exactement par rapport à la répartition de sensibilité des pixels, qui constitue elle-même, avec les écarts réels entre les centres de pixels qiui en résultent, une représentation exacte des dimensions, sous la forme de la trame des pixels,
b) la matrice CCD (1) comporte une zone de pixels active (2) adaptée à la zone maximale de stockage du numériseur d'images (3) et est fixe quant au nombre et à la position des pixels, la constance de l'affectation biunivoque de la zone de pixels à la zone de stockage reposant sur le synchronisme des pixels de l'enregistrement de l'image, et
c) le mécanisme de mouvement est un mécanisme de précision de balayage adapté quant à sa précision à la trame mesurée des pixels, avec lequel la zone de pixels (2) active de la matrice CCD (1) peut être décalée sans vides et essentiellement sans chevauchements, pour recouvrir la surface dans le format d'image (4) à balayer.

2. Dispositif selon la revendication 1, caractérisé en ce que le format d'image (4) est subdivisé en parties exactement superposables et un nombre de matrices CCD (1) au nombre correspondant de parties du format d'image est amené à la mécanique de précision de balayage, de sorte que les parties du format d'image sont balayées selon un même modèle par les matrices CCD (1) affectées à chacune.

3. Dispositif selon la revendication 2, caractérisé en ce que le format d'image (4) est divisé en deux parties qui sont alignées sur la division par deux de l'extension du chemin de balayage maximal.

4. Dispositif selon la revendication 2 ou 3, caractérisé en ce que des matrices CCD de même charge sont mises en oeuvre.

5. Dispositif selon l'une des revendications 1 à 4, caractérisé en ce que la mécanique de précision de balayage ne présente, en raison du choix de matériau approprié, qu'une faible dépendance à la température et que l'alignement sans vides les unes à côté des autres des zones de pixel actives (2) est ajusté pour chaque pas de balayage pour la température ambiante admissible la plus élevée, les faibles chevauchements des zones de pixels actives (2) étant éliminés électroniquement aux basses températures au moyen d'affectations correspondantes de mémoire.
